# EUROPÄISCHE PATENTANMELDUNG

(11) **EP 0 691 351 A1**
(43) Veröffentlichungstag der Anmeldung: **10.01.1996**
(21) Anmeldenummer: 95110323.3
(22) Anmeldetag: 03.07.1995
(51) Int. Cl.: C08F 2/02, C08F 2/38, C08F 20/14

(54) **Kontinuierliches Verfahren zur Herstellung einer thermoplastischen Kunststoff-Formmasse**

(30) Priorität: 09.07.1994 DE 4424300
(71) Anmelder: Röhm GmbH, D-64293 Darmstadt (DE)
(72) Erfinder: Rhein, Thomas, Dr., D-55271 Stadecken-Elsheim (DE); Wicker, Michael, Dr., D-64342 Seeheim-Jugenheim (DE); Klocke, Gerald, D-64287 Darmstadt (DE); Mohr, Ernst, D-64653 Lorsch (DE)

(57) **Zusammenfassung**

Bei einem kontinuierlichen Verfahren zur Herstellung einer thermoplastischen Kunststoff-Formmasse durch die Verfahrensschritte:
I. Mischen von Methylmethacrylat, eines niederen Alkylacrylats und eines Alkylmercaptans mit 3 bis 6 Kohlenstoffatomen im Alkylrest, vorzugsweise n-Butylmercaptan, und einer wirksamen Menge eines radikalbildenden Initiators, gegebenenfalls geringen Mengen an anderen, nicht radikalisch polymerisierbaren Bestandteilen,
II) kontinuierliche Polymerisation der Mischung unter Rühren bis zu einem Umsatz von 30 bis 70 Gew.-%,
III) kontinuierliche Entnahme eines Teils des Polymerisationsgemisches und kontinuierliches Entgasen von flüchtigen Bestandteilen zu einer Schmelze,
IV) kontinuierliche Extrusion der entgasten Schmelze zu einem Strang, Kühlung und Zerkleinern des Stranges zu einem Formmassengranulat,
werden ohne zusätzliche Verfahrensmaßnahmen und ohne erhöhte Kosten Formmassen mit erhöhter Erweichungstemperatur und verminderter Gelbfärbung erhalten.

## Beschreibung

Die Erfindung betrifft ein kontinuierliches Verfahren zur Herstellung einer thermoplastischen Kunststoff-Formmasse auf Basis von Polymethylmethacrylat.

Ein bekanntes verfahren dieser Art besteht aus den Verfahrensschritten
- kontinuierliches Mischen von Methylmethacrylat, gegebenenfalls niederen Alkylacrylaten, einem aliphatischen Mercaptan als Regler zur Einstellung des Polymerisationsgrades und einer wirksamen Menge eines radikalbildenden Initiators,
- kontinuierliche Polymerisation der Mischung unter Rühren bis zu einem Umsatz von 40 bis 80 Gew.-%,
- kontinuierliche Entnahme eines Teils des Polymerisationsgemisches und kontinuierliches Entgasen von flüchtigen Bestandteilen zu einer Schmelze,
- kontinuierliche Extrusion der entgasten Schmelze zu einem Strang, Kühlung des Stranges unter die Erweichungstemperatur und Zerteilen des Stranges zu einem Formmassengranulat.
(Vgl. Ullmann's Encyclopedia of Industrial Chemistry, 5th Ed. (1992) S.479-480)
Bei einer besonderen Ausführungsform eines solchen Verfahrens gemäß EP-A 457 355 werden der Monomerenmischung 5 bis 30 Gew.-% eines flüchtigen organischen Lösemittels, wie niedere Alkylester niederer Carbonsäuren, zugesetzt, wodurch es möglich ist, den Monomerumsatz vor Beginn der Entgasung auf 70 bis 90 % zu erhöhen.

Die bekannten kontinuierlichen Verfahren haben verschiedene Nachteile. So können Reste des Mercaptans in der Formmasse verbleiben und zu Vergilbung und zu Geruchsbelästigung bei der Verarbeitung führen. In der Regel wird die Formmasse beim Hersteller aus der Schmelze zu einem Granulat verarbeitet, das beim Verarbeiter erneut geschmolzen und geformt wird. Diese Arbeitsgänge bedingen eine erhebliche thermische Belastung der Formmasse, was zu Gelbfärbung und Absinken der thermischen Erweichungstemperatur führen kann. An die Erweichungstemperatur von Polymethylmethacrylat-Formmassen werden immer höhere Anforderungen gestellt, wobei schon Unterschiede von 1 bis 2 Grad als bedeutsam angesehen werden.

Ziel der Erfindung ist es, ein kontinuierliches Verfahren zur Herstellung einer thermoplastischen Kunststoff-Formmasse auf Basis von Polymethylmethacrylat mit verbesserten Eigenschaften zur Verfügung zu stellen. Insbesondere sollen Formmassen mit erhöhter Vicat-Erweichungstemperatur und verminderter Gelbfärbung nach thermischer Belastung hergestellt werden. Dieses Ziel soll auf kostengünstige Weise, d.h. ohne zusätzliche Ausgangsstoffe oder zusätzliche Verfahrensschritte verwirklicht werden. Als Maßstab der Verbesserung dienen handelsübliche Polymethylmethacrylat-Formmassen.

Es wurde gefunden, daß die gestellte Aufgabe durch ein kontinuierliches Verfahren zur Herstellung einer thermoplastischen Kunststoff-Formmasse gelöst wird, das folgende Verfahrensschritte umfaßt:
I. Mischen von
   a) 80 - 99,95 Gew.-Teilen Methylmethacrylat,
   b) 0 - 19,95 Gew.-Teilen eines Alkylacrylats mit 1 bis 4 Kohlenstoffatomen im Alkylrest,
   c) 0,05 - 0,25 Gew.-Teilen eines Alkylmercaptans mit 3 bis 6 Kohlenstoffatomen im Alkylrest, vorzugsweise n-Butylmercaptan,
   d) einer wirksamen Menge eines radikalbildenden Initiators,
   e) weniger als 5 Gew.-Teilen anderen, nicht radikalisch polymerisierbaren
   Bestandteilen,
II) kontinuierliche Polymerisation der Mischung unter Rühren bis zu einem Umsatz von 30 bis 70 Gew.-%,
III)kontinuierliche Entnahme eines Teils des Polymerisationsgemisches und kontinuierliches Entgasen von flüchtigen Bestandteilen zu einer Schmelze,
IV) kontinuierliche Extrusion der entgasten Schmelze zu einem Strang, Kühlen und Zerkleinern des Stranges zu einem Formmassengranulat.

Nach dem Verfahren der Erfindung können thermoplastische Polymethylmethacrylat-Formmassen üblicher Zusammensetzung hergestellt werden. Je nach den gewünschten Verarbeitungs- und Kunststoffeigenschaften handelt es sich entweder um Homopolymerisate des Methylmethacrylats oder um Mischpolymerisate dieses Monomeren mit einem oder mehreren anderen äthylenisch ungesättigten, radikalisch polymerisierbaren Monomeren, unter denen die Alkylester der Acrylsäure mit 1 bis 4 Kohlenstoffatomen im Alkylrest die wichtigste Rolle spielen. Methyl- und Ethylacrylat sind bevorzugt.

Erfindungsgemäß wird ein niederes Alkylmercaptan als Polymerisationsregler zur Begrenzung des Polymerisationsgrades benutzt. Diese Mercaptane, beispielsweise auch n-Butylmercaptan, sind als Regler bekannt, jedoch werden in der Praxis höhere Mercaptane, insbesondere Dodecylmercaptan, häufiger verwendet. Dank ihres niedrigeren Dampfdruckes verursachen sie geringere Geruchsbelästigung als die niederen Mercaptane. Die Bevorzugung höherer Mercaptane kommt beispielsweise in der EP-A 457 355 zum Ausdruck; dort wird zwar unter den verwendbaren Reglern auch n-Butylmercaptan erwähnt, jedoch werden in den Ausführungsbeispielen stets höhere Mercaptane, wie Dodecylmercaptan oder 2-Ethylhexyl-3-mercapto-propionat, eingesetzt.

Der Einsatz von Butylmercaptanen ist bei der Herstellung von thermoplastischem Polymethylmethacrylat-Kunststoff zum Spinnen von optischen Fasern bekannt. Gemäß JP-A 86 02103 (Chemical Abstracts 104, 208586) wird Butylmercaptan in einem speziellen Polymerisationsverfahren eingesetzt, bei dem Methylmethacrylat ohne Rühren teilweise polymerisiert und eine spinnbare Formmasse durch Abdestillieren der nicht umgesetzten flüchtigen Ausgangsstoffe gewonnen wird. Nach JP-A 82 104906 (Chemical Abstracts 98, 35674) wird ein Monomergemisch von Methylmethacrylat und Methylacrylat mit tert.-Butylmercaptan als Regler in einem Rührreaktor teilpolymerisiert und wie oben zu optischen Fasern versponnen.

Beim Verfahren der Erfindung hat das niedere Alkylmercaptan die überraschende Wirkung, daß eine thermoplastische Formmasse mit einer höheren Vicat-Erweichungstemperatur erhalten wird, als wenn ein gleichgroßer Polymerisationsgrad mittels eines höheren Mercaptans eingestellt wird. Auch wenn diese Erhöhung oft nur 1 bis 2 Grad ausmacht, hat dies erhebliche praktische Bedeutung.

Darüberhinaus weisen die erfindungsgemäß hergestellten Formmassen eine erhöhte Vergilbungsbeständigkeit auf. Mit Dodecylmercaptan hergestellte Formmassen vergilben bei der thermoplastischen Verarbeitung umso mehr, je höher die Schmelzetemperatur liegt. Dagegen bleibt die verarbeitungsbedingte Vergilbung bei den erfindungsgemäßen Formmassen bei Schmelzetemperaturen bis 300°C auf dem gleichen niedrigen Niveau. Der Restgehalt an Mercaptan in der entgasten Formmasse liegt um eine Größenordnung niedriger, was zu der verminderten Vergilbung beiträgt.

Unter den erfindungsgemäß einzusetzenden Alkylmercaptanen ist das n-Butylmercaptan besonders bevorzugt. Es hat nahezu den gleichen Siedepunkt wie Methylmethacrylat und läßt sich aus diesem Grund besonders leicht und vollständig zusammen mit dem nicht polymerisierten Monomeren entgasen und aus den Dämpfen wieder kondensieren. Alkylmercaptane mit weniger als 3 C-Atomen erfordern zusätzliche Maßnahmen, um sie mit den entgasten Monomeren zu kondensieren. Alkylmercaptane mit mehr als 6 C-Atomen haben einen deutlich höheren Siedepunkt als Methylmethacrylat und sind entsprechend schwerer vollständig zu entgasen.

Es wird als besonders vorteilhaft empfunden, daß diese Verbesserungen ohne zusätzliche Kosten erreichbar sind. n-Butylmercaptan ist nicht nur als solches preisgünstig, sondern man benötigt davon dank seines höheren Schwefelgehaltes auch weniger als von höheren Mercaptanen, um die gleiche Wirkung zu erzielen. Das bei der Polymerisation nicht verbrauchte Alkylmercaptan wird beim Abdestillieren mit den Monomeren verflüchtigt und zusammen mit diesen zurückgewonnen und wiederverwertet. Daher fallen keine zusätzlichen Kosten bei der Herstellung, Gewinnung und Verarbeitung der Formmasse an.

Zur Auslösung der Polymerisation können die für diesen Zweck gebräuchlichen radikalbildenden Polymerisationsinitiatoren, wie Azo-bis-isobutyronitril, tert.-Butyl-per-2-ethylhexanoat oder Di-tert.-butylperoxid, in einer wirksamen Menge eingesetzt werden. Sie soll ausreichen, um bei einer Polymerisationstemperatur von 120 bis 170°C, vorzugsweise 140 bis 160°C, innerhalb einer Verweilzeit von 20 bis 120 Minuten im Polymerisationsreaktor einen Umsatz von 30 bis 70 Gew.-% der eingesetzten Monomeren zu erreichen. Bevorzugt sind Initiatoren mit einer Halbwertzeit von 1 min bei 130 bis 160°C. Geeignete Initiatormengen liegen in der Regel bei 0,005 bis 0,15 Gew.-%.

Durch das Zusammenwirken von Initiator und Polymerisationsregler wird der Polymerisationsgrad des erzeugten Homo- oder Copolymerisats in an sich bekannter Weise bestimmt. Technische Formmassen zum Extrudieren, Spritzgießen oder für die Folienherstellung haben Molekulargewichte von 100 000 bis 200 000 Dalton (Gewichtsmittelwerte) bzw. Viskositätszahlen von 45 bis 80 ml/g (gemessen in Chloroform bei 25°C).

Verdünnungs- oder Lösemittel für das Polymerisationsgemisch werden beim Verfahren der Erfindung nicht benötigt. Daher liegt der Anteil an nicht radikalisch polymerisierbaren Bestandteilen unter 5 Gew.-Tln.

Bei der Bestimmung der Bestandteile c, d und e wird vorausgesetzt, daß a und b, d.h. Methylmethacrylat und Acrylester, zusammen 100 Gew.-Tle. ausmachen. Es ist nicht zwingend erforderlich, aber zweckmäßig, alle Bestandteile a bis e vor dem kontinuierlichen Einführen in den Polymerisationsreaktor in einem vorgeschalteten Mischgefäß zu mischen. Dies kann absatzweise geschehen, jedoch wird kontinuierliches Mischen durch gleichmäßigen Zustrom aller Komponenten und kontinuierliche Abnahme der Mischung bevorzugt.

Die kontinuierliche Polymerisation findet in einem gerührten Reaktor unter Druck bei möglichst hoher Durchmischung statt. Sofern sich eine Gasphase im Reaktor befindet, kann sie allein aus dem Dampf der flüchtigen Monomeren bestehen und unter deren autogenem Druck stehen. Durch kontinuierlichen Zustrom der Monomermischung und kontinuierliche Abnahme eines gleichgroßen Stromes an Polymerisationsgemisch wird der Umsatzgrad konstant im Bereich von 30 bis 70 Gew.-% gehalten, bezogen auf die Gewichtssumme aus Monomeren und Polymeren. Die Temperatur des Polymerisationsgemisches wird durch Kühlung bei 120 bis 170°C, vorzugsweise 130 bis 160°C gehalten.

Aus dem abgenommenen Polymerisationsgemisch werden die flüchtigen Bestandteile auf an sich bekannte Weise kontinuierlich entgast. Dies kann in mehreren Stufen unter abnehmendem Druck bzw. unter Vakuum geschehen. Geeignete Anlagen zur Entspannungsverdampfung sind allgemein gebräuchlich. Die letzten Anteile an flüchtigen Bestandteilen werden in der Regel in einem Entgasungsextruder bei Temperaturen von 220 bis 280°C unter einem Druck von 10 bis 150 mbar entgast. Nach der Entgasung soll der Restgehalt an Monomeren unter 0,5, vorzugsweise unter 0,2 Gew.-% und der Gehalt an Alkylmercaptan unter 0,01, vorzugsweise unter 0,005 Gew.-% liegen. Nach dem Durchlaufen der Entgasungszone wird die entgaste Formmassenschmelze in einer Kompressionszone des Extruders auf hohen Druck gebracht und zu einem Strang oder Strangbündel extrudiert. Die Stränge werden in üblicher Weise unter die Erweichungstemperatur gekühlt und zu einem handelsfähigen Formmassengranulat zerteilt. Die Kühlung kann vor, während oder nach der Zerteilung vorgenommen werden.

Der Hauptteil der nicht umgesetzten Monomeren wird zusammen mit nicht verbrauchtem Alkylmercaptan bei oder oberhalb des atmosphärischen Druckes verdampft, kondensiert und in das Mischgefäß zurückgeführt. Aus dem Vakuumdestillat werden die Monomeren bei entsprechend tiefer Temperatur herauskondensiert und in gleicher Weise zurückgeführt.

### Beispiel 1

Eine Mischung aus 99 Gew.-Tln. Methylmethacrylat, 1 Gew.-Tl. Methylacrylat, 0,03 Gew.-Tln. t-Butyl-perisooctanoat und 0,14 Gew.-Tln. n-Butylmercaptan wird kontinuierlich in einer Menge von 9700 g/h in einen auf 150°C gehaltenen Rührreaktor mit einem Volumen von 7 l eingeführt. Im stationären Zustand hat das Reaktionsgemisch einen Polymerisatgehalt von etwa 50 Gew.-%. Eine dem Zustrom entsprechende Menge des Reaktionsgemisches wird kontinuierlich abgenommen, in einem Wärmetauscher auf 195°C erwärmt und einem üblichen Entgasungsextruder zugeführt. Es wird ein gleichlaufender, dicht kämmender Doppelschneckenextruder mit einem Schneckendurchmesser von 25 mm und einer Länge von 48 D verwendet, der im Temperaturbereich von 250 bis 260°C und bei absteigenden Drücken von 1 bis 0,01 bar (Vakuum) betrieben wird. Die Monomerendämpfe werden abgezogen, kondensiert und zur Erzeugung des Ausgangsgemisches zurückgeführt. Die Polymerisatschmelze wird zu Rundsträngen von 2-4 mm Dicke extrudiert, die durch ein Wasserbad geführt und nach Abkühlung unter die Erweichungstemperatur zu einem Granulat zerkleinert werden.

### Vergleichsversuch 1

Es wird verfahren wie im Beispiel 1, jedoch das n-Butylmercaptan durch 0,33 Gew.-Tl. Dodecylmercaptan ersetzt.

### Ergebnisse

An den Granulaten bzw. daraus bei 240°C spritzgegossenen Probekörpern werden folgende Eigenschaften ermittelt:

| | Beispiel 1 | Vergl.-Versuch 1 |
|---|---|---|
| Reduzierte Viskosität ηₛₚ/c | 54,7 ml/g | 53,4 ml/g |
| Vicat-Erweichungstemperatur | 112°C | 110°C |
| Restgehalt Methylmethacrylat | 0,17 Gew.-% | 0,1 Gew.-% |
| SH-Gehalt | 17 ppm | 54 ppm |
| entsprechend Rest-Alkylmercaptan | 45 ppm | 333 ppm |
| Gelbwert | 0,5 | 0,9 |

### Beispiel 2

Das Verfahren gemäß Beispiel 1 wird mit folgender Zusammensetzung des Ausgangsgemisches wiederholt: 97 Gew.-Tln. Methylmethacrylat, 3 Gew.-Tl. Methylacrylat, 0,03 Gew.-Tln. t-Butyl-perisooctanoat und 0,08 Gew.-Tln. n-Butylmercaptan, wobei die Polymerisation bei 160°C durchgeführt wird.

### Vergleichsbeispiel 2

Es wird verfahren wie im Beispiel 2, jedoch das n-Butylmercaptan durch 0,19 Gew.-Tl. Dodecylmercaptan ersetzt.

### Ergebnisse

An den Granulaten bzw. daraus bei 240°C spritzgegossenen Probekörpern werden folgende Eigenschaften ermittelt:

| | Beispiel 2 | Vergl.-Versuch 2 |
|---|---|---|
| Reduzierte Viskosität ηₛₚ/c | 70,6 ml/g | 70,4 ml/g |
| Vicat-Erweichungstemperatur | 108°C | 107°C |
| Restgehalt Methylmethacrylat | 0,27 Gew.-% | 0,17 Gew.-% |
| SH-Gehalt | 5,6 ppm | 25 ppm |
| entsprechend Rest-Alkylmercaptan | 15 ppm | 154 ppm |

## Patentansprüche

1. Kontinuierliches Verfahren zur Herstellung einer thermoplastischen Kunststoff-Formmasse durch die Verfahrensschritte:
I. Mischen von
a) 80 - 99,95 Gew.-Teilen Methylmethacrylat,
b) 0 - 19,95 Gew.-Teilen eines Alkylacrylats mit 1 bis 4 Kohlenstoffatomen im Alkylrest,
c) 0,05 - 0,25 Gew.-Teilen eines Alkylmercaptans mit 3 bis 6 Kohlenstoffatomen im Alkylrest,
d) einer wirksamen Menge eines radikalbildenden Initiators,
e) weniger als 5 Gew.-Teilen anderen, nicht radikalisch polymerisierbaren
Bestandteilen,
II) kontinuierliche Polymerisation der Mischung unter Rühren bis zu einem Umsatz von 30 bis 70 Gew.-%,
III) kontinuierliche Entnahme eines Teils des Polymerisationsgemisches und kontinuierliches Entgasen von flüchtigen Bestandteilen zu einer Schmelze,
IV) kontinuierliche Extrusion der entgasten Schmelze zu einem Strang, Kühlung und Zerkleinern des Stranges zu einem Formmassengranulat.

2. Verfahren nach Anspruch 1, dadurch gekennzeichnet, daß als Alkylmercaptan n-Butylmercaptan eingesetzt wird.

3. Verfahren nach Anspruch 1 oder 2, dadurch gekennzeichnet, daß die Schmelze bis zu einem Restgehalt an Methylmethacrylat unter 0,5 Gew.-% und an dem Alkylmercaptan unter 0,01 Gew.-% entgast wird.

4. Verfahren nach einem oder mehreren der Ansprüche 1 bis 3, dadurch gekennzeichnet, daß die bei der Entgasung entstehenden Dämpfe aus Monomeren und gegebenenfalls dem Alkylmercaptan kondensiert und mit den Ausgangsstoffen vermischt werden.
